# EUROPEAN PATENT APPLICATION

(11) **EP 4 120 582 A1**
(43) Date of publication of application: **18.01.2023**
(21) Application number: 21775612.1
(22) Date of filing: 18.03.2021
(51) Int. Cl.: H04B 7/06

(54) **ELECTRONIC DEVICE AND METHOD FOR WIRELESS COMMUNICATION, AND COMPUTER-READABLE STORAGE MEDIUM**

(30) Priority: 25.03.2020 CN 202010217738
(71) Applicant: Sony Group Corporation, Minato-Ku, Tokyo, 108-0075 (JP)
(72) Inventor: SUN, Chen, Beijing 100028 (CN); LIU, Min, Beijing 100028 (CN)
(74) Representative: D Young & Co LLP
(86) International application number: PCT/CN2021/081450
(87) International publication number: WO 2021/190386

(57) **Abstract**

The present disclosure provides an electronic device and method for wireless communication, and a computer-readable storage medium. The electronic device comprises: a processing circuit, configured to acquire a channel state information (CSI) resource configuration and a CSI report configuration from a base station, the CSI report configuration being associated with one or more CSI resource configurations, the CSI resource configuration comprising a resource configuration for a reference signal on one or more bandwidth parts (BWPs), and to send, on the basis of the CSI report configuration, to the base station a measurement result, obtained by measuring a reference signal specified in the associated CSI resource configuration, of a beam corresponding to the reference signal.

## Description

The present application claims the priority to Chinese Patent Application No.202010217738.9, titled "ELECTRONIC DEVICE AND METHOD FOR WIRELESS COMMUNICATION, AND COMPUTER-READABLE STORAGE MEDIUM", filed on March 25, 2020 with the China National Intellectual Property Administration, which is incorporated herein by reference in its entirety.

### FIELD

The present disclosure relates to the technical field of wireless communications, and in particular, to a beam management technology over multiple bandwidth parts (BWP). More particularly, the present application relates to an electronic apparatus and a method for wireless communications, and a computer-readable storage medium.

### BACKGROUND

In NR Rel-15, the channel state information resource (CSI resource) used for beam measurement, such as the Channel State Information Reference Signal (CSI-RS) and the synchronizing signal block (SSB), may be transmitted on any BWP, and thus user equipment (UE) does not need to perform frequency conversion when performing beam measurement.

According to the prior art, the UE only activates one BWP each time for each of uplink and downlink. That is, the UE can activate only one uplink BWP and one downlink BWP each time. Therefore, the UE makes a feedback only for the downlink BWP when reporting a beam measurement result, and does not wish to receive an aperiodic trigger for measuring channel state information (CSI) on other BWPs.

In addition, each satellite may generate multiple beams. According to 38.821, there are currently two manners that a physical cell identifier (PCI) corresponds to a beam in a non-terrestrial network (NTN). In a first one, each PCI corresponds to multiple beams, and each of the multiple beams corresponds to a specific synchronizing signal block (SSB). In a second one, each PCI corresponds to one beam, that is, each satellite cell corresponds to only one beam, to which the beam management mechanism in NR Rel. 15 is no longer applicable.

In the first case, the UE in the idle state only needs to detect SSBs mapped to the same PCI, so as to perform resynchronization quickly and easily. For the UE in a connected state, a beam-specific SSB and a beam-specific CSI RS may be used for beam management to avoid data transmission interruption and signaling overhead incurred by the cell handover.

In addition, in the NTN scenario, in a case that a frequency reuse factor (FRF) is equal to 1, the available bandwidth allocated to each beam is very large, but the UE is prone to suffer from severe co-channel interferences from an adjacent beam. Therefore, the interferences from an adjacent beam can be effectively reduced by using a frequency deployment of FRF>1, improving the signal to interference and noise ratio (SINR).

Therefore, different beams may be located on different BWPs, and a beam management scheme suitable for this scenario is expected.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus includes processing circuitry. The processing circuitry is configured to: acquire, from a base station, a CSI resource configuration and a CSI report configuration, wherein the CSI report configuration is associated with one or more CSI resource configurations, and the CSI resource configuration comprises a resource configuration for a reference signal on one or more BWPs; and transmit, based on the CSI report configuration, a beam measurement result of a beam corresponding to a reference signal specified in the CSI resource configuration associated with the CSI report configuration to the base station, wherein the beam measurement result is obtained by measuring the reference signal.

According to another aspect of the present disclosure, a method for wireless communications is provided. The method includes: acquiring, from a base station, a CSI resource configuration and a CSI report configuration, wherein the CSI report configuration is associated with one or more CSI resource configurations, and the CSI resource configuration comprises a resource configuration for a reference signal on one or more BWPs; and transmitting, based on the CSI report configuration, a beam measurement result of a beam corresponding to a reference signal specified in the CSI resource configuration associated with the CSI report configuration to the base station, wherein the beam measurement result is obtained by measuring the reference signal.

According to an aspect of the present disclosure, an electronic apparatus for wireless communications is provided. The electronic apparatus includes processing circuitry. The processing circuitry is configured to: provide, to user equipment, a CSI resource configuration and a CSI report configuration, wherein the CSI report configuration is associated with one or more CSI resource configurations, and the CSI resource configuration comprises a resource configuration for a reference signal on one or more BWPs; and acquire, based on the CSI report configuration, a beam measurement result of a beam corresponding to a reference signal specified in the CSI resource configuration associated with the CSI report configuration from the UE, wherein the beam measurement result is obtained by measuring the reference signal.

According to another aspect of the present disclosure, a method for wireless communications is provided. The method includes: providing, to user equipment, a CSI resource configuration and a CSI report configuration, wherein the CSI report configuration is associated with one or more CSI resource configurations, and the CSI resource configuration comprises a resource configuration for a reference signal on one or more BWPs; and acquiring, based on the CSI report configuration, a beam measurement result of a beam corresponding to a reference signal specified in the CSI resource configuration associated with the CSI report configuration from the UE, wherein the beam measurement result is obtained by measuring the reference signal.

The electronic apparatus and the method according to the present disclosure can implement measurement and report of the beams on multiple BWPs without increasing the complexity of the UE.

According to other aspects of the present disclosure, there are further provided computer program codes and computer program products for implementing the methods for wireless communications above, and a computer readable storage medium having recorded thereon the computer program codes for implementing the methods for wireless communications described above.

These and other advantages of the present disclosure will be more apparent from the following detailed description of preferred embodiments of the present disclosure in conjunction with the accompanying drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a block diagram showing functional modules of an electronic apparatus for wireless communications according to an embodiment of the present disclosure;
Figure 2 shows an example of a CSI framework under aperiodic trigger or semi-static trigger;
Figure 3 shows another example of the CSI framework under aperiodic trigger or semi-static trigger;
Figure 4 shows another example of the CSI framework under aperiodic trigger or semi-static trigger;
Figure 5 shows another example of the CSI framework under aperiodic trigger or semi-static trigger;
Figure 6 shows an example in which each of BWPs only has a specific beam transmitting thereon;
Figure 7 is a block diagram showing functional modules of an electronic apparatus for wireless communications according to an embodiment of the present disclosure;
Figure 8 is a block diagram showing functional modules of an electronic apparatus for wireless communications according to another embodiment of the present disclosure;
Figure 9 shows a flowchart of a method for wireless communications according to an embodiment of the present disclosure;
Figure 10 shows a flowchart of a method for wireless communications according to another embodiment of the present disclosure;
Figure 11 is a block diagram showing a first example of an exemplary configuration of an eNB or gNB to which the technology of the present disclosure may be applied;
Figure 12 is a block diagram showing a second example of an exemplary configuration of an eNB or gNB to which the technology of the present disclosure may be applied;
Figure 13 is a block diagram showing an example of an exemplary configuration of a smartphone to which the technology according to the present disclosure may be applied;
Figure 14 is a block diagram showing an example of an exemplary configuration of a car navigation apparatus to which the technology according to the present disclosure may be applied; and
Figure 15 is a block diagram of an exemplary block diagram illustrating the structure of a general purpose personal computer capable of realizing the method and/or device and/or system according to the embodiments of the present disclosure.

### DETAILED DESCRIPTION

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### < First Embodiment

As mentioned above, for example, in NTN, different beams may be located on different BWPs, and thus beams on multiple BWPs are required to be measured and a measurement result is to be reported. Therefore, it is desirable to provide a new beam management scheme to implement this function efficiently. It should be understood that although the problem addressed by the present disclosure is described based on an NTN scenario mentioned above, the scope to which the present disclosure is applicable is not limited to this, but may be appropriately applied to any occasion with a similar requirement.

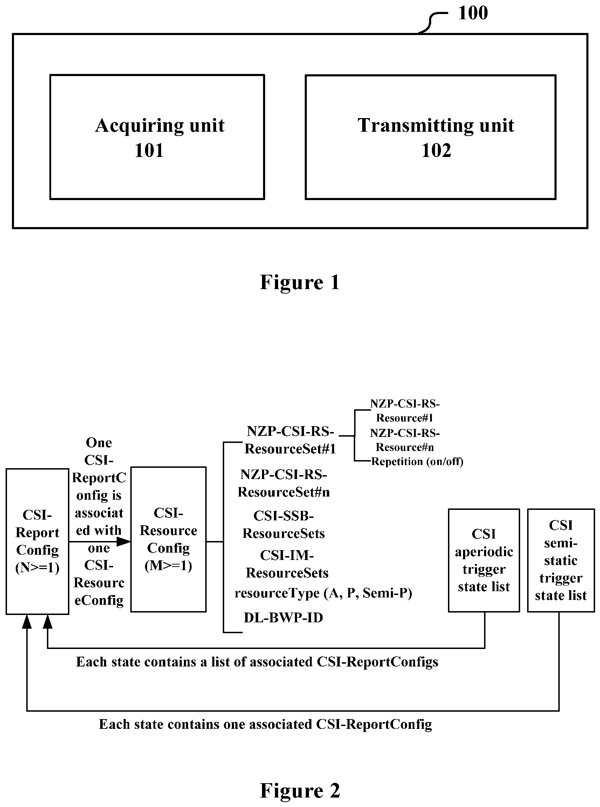

Figure 1 is a block diagram showing functional modules of an electronic apparatus 100 for wireless communications according to an embodiment of the present disclosure. As shown in Figure 1, the electronic apparatus 100 includes: an acquiring unit 101 and a transmitting unit 102. The acquiring unit 101 is configured to acquire, from a base station, a CSI resource configuration and a CSI report configuration. The CSI report configuration is associated with one or more CSI resource configurations. The CSI resource configuration includes a resource configuration for a reference signal on one or more BWPs. The transmitting unit 102 is configured to transmit, based on the CSI report configuration, a beam measurement result of a beam corresponding to a reference signal specified in the CSI resource configuration associated with the CSI report configuration to the base station. The beam measurement result is obtained by measuring the reference signal.

The acquiring unit 101 and the transmitting unit 102 may be implemented by one or more processing circuitry. The processing circuitry may be implemented as a chip for example. Moreover, it should be understood that various functional units in the apparatus shown in Figure 1 are only logical modules defined based on their specific functions, and are not intended to limit a specific implementation.

The electronic apparatus 100 may be, for example, arranged at the side of the UE or may be communicatively connected to the UE. Here, it should be noted that the electronic apparatus 100 may be implemented at a chip level or a device level. For example, the electronic apparatus 100 may serve as the UE itself and may further include external devices such as a memory and a transceiver (which are not shown in the drawings). The memory may be configured to store programs to be executed by the UE to implement various functions and related data information. The transceiver may include one or more communication interfaces to support communications with other devices (for example, a base station, another UE and the like). Implementations of the transceiver are not limited herein.

For example, the acquiring unit 101 may acquire the CSI resource configuration and the CSI report configuration via radio resource control (RRC) signaling. The CSI resource configuration is configured to configure a reference signal to be measured. The CSI report configuration is configured to configure a way of reporting a beam measurement result. The type of the CSI resource may be periodic, semi-static or aperiodic. Correspondingly, the CSI report may be periodic, semi-static or aperiodic.

The reference signal described herein includes, but is not limited to, the CSI-RS or the SSB. In the following description, the CSI-RS is taken as an example. However, it should be understood that the description is also applicable to other downlink reference signals and is non-restrictive.

For the periodic manner, the UE periodically measures the reference signal (corresponding to a beam) configured in the CSI resource configuration, and the transmitting unit 102 transmits the beam measurement result to the base station based on the CSI report configuration.

For the semi-static or aperiodic manner, the acquiring unit 101 is further configured to acquire, from the base station, an aperiodic trigger or a semi-static trigger for the CSI report configuration, and the transmitting unit 102 is configured to perform beam measurement and transmission of a beam measurement result based on the CSI report configuration indicated in the aperiodic trigger or the semi-static trigger. For example, the aperiodic trigger or semi-static trigger indicates to measure at least a part of reference signals configured in the CSI resource configuration and report the measurement result. The CSI resource configuration associated with the CSI report configuration is required to be indicated in the CSI report configuration.

For ease of understanding, Figure 2 shows an example of a CSI framework under aperiodic trigger or semi-static trigger manner. For example, in the case of aperiodic trigger, the acquiring unit 101 acquires a list of CSI aperiodic trigger state from the base station, for example, through downlink control information (DCI), where each state contains a list of the associated CSI report configurations (CSI-ReportConfigs). In the case of semi-static trigger, the acquiring unit 101 acquires a list of CSI semi-static trigger state from the base station, for example, through MAC CE, where each state contains one associated CSI-ReportConfig. In the example shown in Figure 2, one CSI-ReportConfig is associated with one CSI resource configuration (CSI-ResourceConfig). The CSI-ResourceConfig includes an NZP-CSI-RS resource set, a CSI-SSB resource set and a CSI-IM resource set, and also includes an indication of a type of the resource (i.e., periodic, aperiodic, or semi-static). The CSI-ReportConfig further includes information indicating an identifier of an uplink BWP (UL-BWP-ID, not shown in Figure 2) for reporting the measurement result. In addition, the CSI-ResourceConfig shown in Figure 2 includes the identifier (ID) of a BWP where the resource of a downlink reference signal is located. In other words, in the CSI framework shown in Figure 2, one CSI-ReportConfig corresponds to one CSI-ResourceConfig, and one CSI-ResourceConfig corresponds to one BWP.

In order to enable measurement and reporting of beams on multiple BWPs, the CSI framework of Figure 2 is improved in this embodiment as follows. One CSI-ReportConfig may be associated with one or more CSI-ResourceConfigs, and the CSI-ResourceConfig includes a resource configuration for a reference signal on one or more BWPs. Note that in the present disclosure, the BWP to be measured and reported refers to a downlink BWP, and there is no restriction on an uplink BWP.

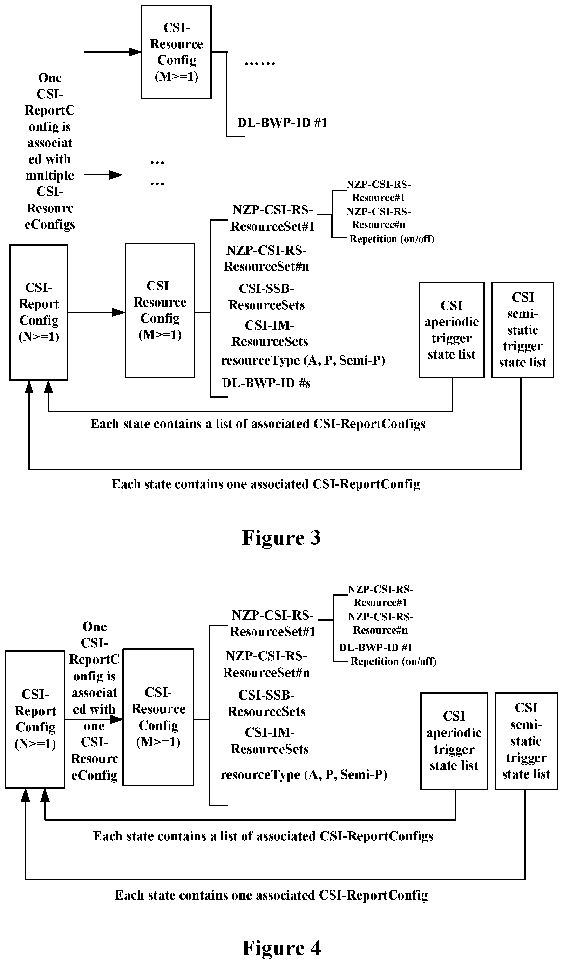

In a first example, the CSI report configuration is associated with multiple CSI resource configurations, and each CSI resource configuration is a configuration for one BWP Figure 3 shows an example of the CSI framework in this case. It can be seen that the resources of reference signals configured in respective CSI resource configurations are on one BWP (with the same DL-BWP-ID). In a case that the DL-BWP-IDs in respective CSI resource configurations are different, the CSI report configuration can be associated with the resource configuration of reference signals on multiple BWPs, so as to report the beam measurement result on the multiple BWPs.

For example, the UE is configured to report CSI on UL BWP #1. The BWP corresponding to CSI-ResourceConfig #1 associated with the CSI-ReportConfig #1 is DL BWP #1. The BWP corresponding to CSI-ResourceConfig #2 associated with CSI-ReportConfig #1 is DL BWP#2. The BWP corresponding to CSI-ResourceConfig #3 associated with CSI-ReportConfig #1 is DL BWP#3. When the UE receives an aperiodic or semi-static trigger for CSI-ReportConfig #1, beams on DL BWP#1, DL BWP#2, and DL BWP#3 can be measured and reported.

In addition, in order to distinguish beam IDs on different BWPs when reporting the CSI, the reference signal identifier (RS-ID) varies from BWP to BWP. For example, the BWP corresponding to CSI-ResourceConfig #1 is DL BWP#1. The CSI-ResourceConfig #1 includes NZP-CSI-RS-resource #1, #2, #3. The BWP corresponding to CSI-ResourceConfig #2 is DL BWP#2. The CSI-ResourceConfig #2 includes NZP-CSI-RS-resource #4, #5, #6. The UE may find, based on the measurement result, a beam with the best quality to report its ID and L1-RSRP. Assuming that the beam with the best quality is CRI (CSI-RS resource identifier) #4, the reported content is {CRI#4, L1-RSRP#4}. In a case that the RS-IDs on different BWPs are the same, the reported content of the beam is to be modified. For example, CSI-ResourceConfig #1 and #2 both contain NZP-CSI-RS resource #1, #2, and #3, and the reported content may be {CSI-ResourceConfig #2, CRI#1, L1-RSRP#1}.

For example, the pseudocode for an RRC parameter in 38.331 may be modified as follows (where the underlined part shows the modification).

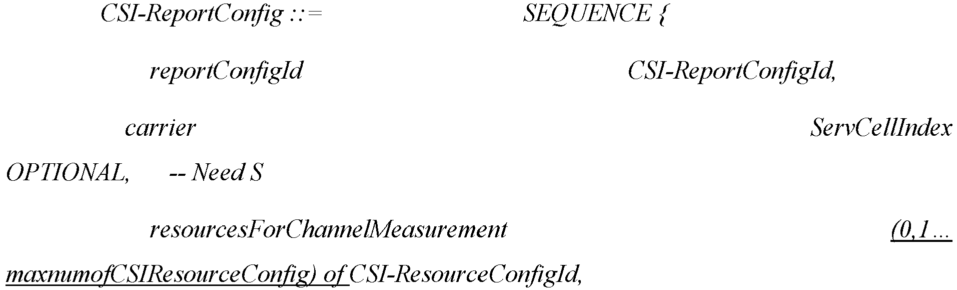

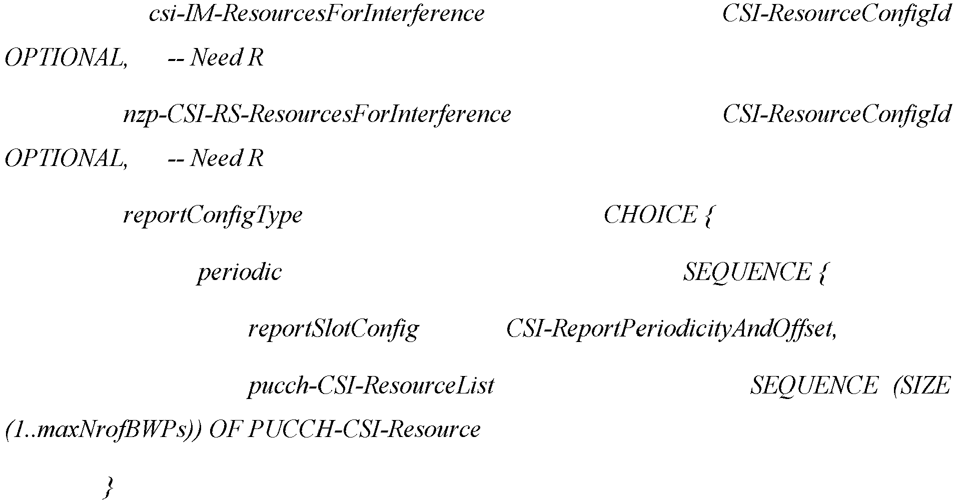

In a second example, the CSI report configuration is associated with one CSI resource configuration. Each CSI resource configuration includes multiple CSI resource sets. Each CSI resource set corresponds to one BWP. Figure 4 shows an example of the CSI framework in this case. It can be seen that each CSI resource set in the CSI resource configuration includes a DL-BWP-ID field. The DL-BWP-ID field indicates that the resource of the reference signal in the resource set is on the BWP corresponding to the ID. In a case that the DL-BWP-IDs in the multiple CSI resource sets are different from each other, the CSI report configuration may be associated with the resource configuration of reference signals on multiple BWPs, so as to report the beam measurement result on the multiple BWPs. Note that the NZP-CSI-RS resource set is shown in Figure 4 as an example, but this is non-restrictive. The present solution is also applicable to the resource sets of another reference signal.

For example, the UE is configured to report CSI on UL BWP #1. In CSI-ResourceConfig #1 associated with CSI-ReportConfig #1, the BWP corresponding to NZP-CSI-RS-ResourceSet #1 is DL BWP #1, the BWP corresponding to NZP-CSI-RS-ResourceSet #2 is DL BWP #2, and the BWP corresponding to NZP-CSI-RS-ResourceSet #3 is DL BWP #3. When the UE receives the aperiodic or semi-static trigger for CSI-ReportConfig #1, the beams on DL BWP#1, DL BWP#2 and DL BWP#3 can be measured and reported.

In addition, in order to distinguish beam IDs on different BWPs when reporting the CSI, the RS-IDs on different BWPs may be different. For example, the BWP corresponding to NZP-CSI-RS-ResourceSet #1 is DL BWP#1. NZP-CSI-RS-ResourceSet #1 includes NZP-CSI-RS-resource #1, #2, #3. The BWP corresponding to NZP-CSI-RS-ResourceSet #2 is DL BWP#2. NZP-CSI-RS-ResourceSet #2 includes NZP-CSI-RS-resource #4, #5, #6. The UE may find, based on the measurement result, a beam with the best quality to report its ID and L1-RSRP Assuming that the beam with the best quality is CRI (CSI-RS resource identifier) #4, the reported content is {CRI#4, L1-RSRP#4}. In a case that the RS-IDs on different BWPs are the same, the reported content of the beam is to be modified. For example, NZP-CSI-RS-ResourceSet #1 and #2 both contain NZP-CSI-RS-resources #1, #2, and #3, and the reported content may be {NZP-CSI-RS-ResourceSet #2, CRI#1, L1-RSRP#1}.

For example, the pseudocode for the RRC parameter in 38.331 may be modified as follows (where the underlined part shows the modification).

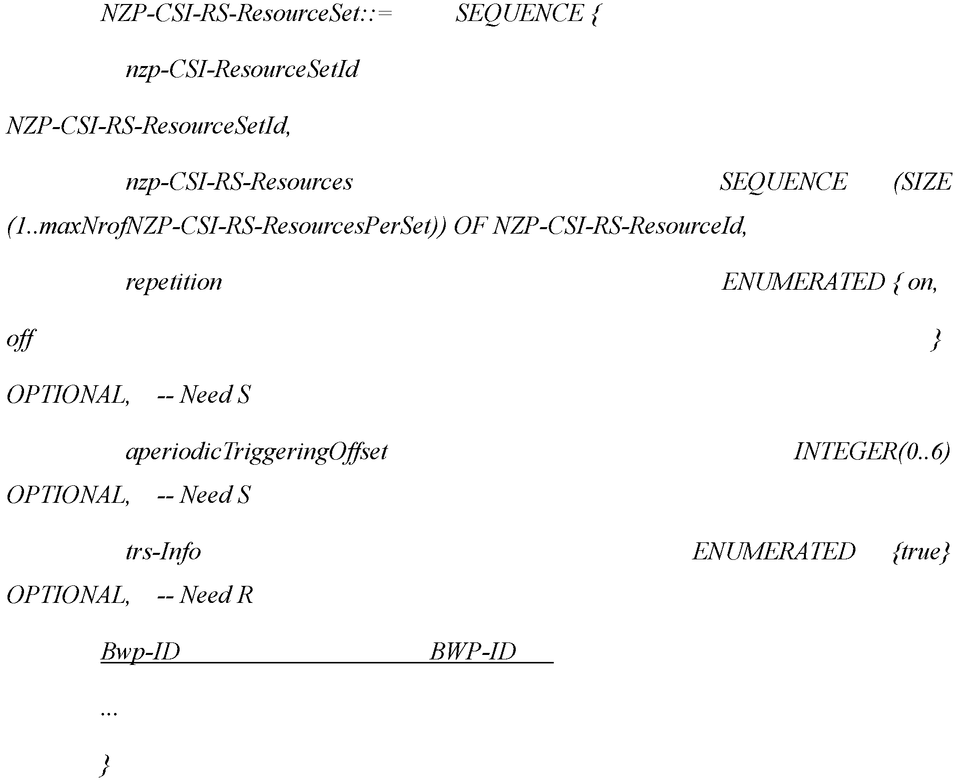

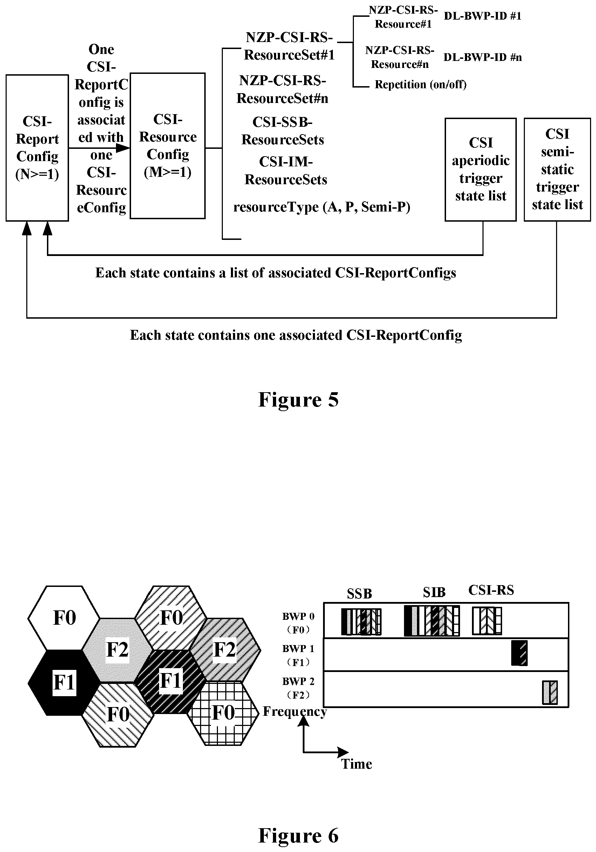

In the third example, the CSI report configuration is associated with one CSI resource configuration. Each CSI resource configuration includes multiple CSI resource sets. Each CSI resource within each CSI resource set corresponds to one BWP. Figure 5 shows an example of the CSI framework in this case. It can be seen that each CSI resource within each CSI resource set in the CSI resource configuration includes a DL-BWP-ID field. The DL-BWP-ID field indicates that the resource of the corresponding reference signal is on the BWP corresponding to the ID. In a case that the DL-BWP-IDs of respective CSI resources are different, the CSI report configuration may be associated with the resource configurations of reference signals on multiple BWPs, so as to report the beam measurement result on the multiple BWPs. Similarly, although the NZP-CSI-RS resource is shown in Figure 5 as an example, this is non-restrictive. The present solution may also be applicable to resources of another reference signal.

For example, the UE is configured to report CSI on UL BWP #1. The NZP-CSI-RS-ResourceSet #1 in CSI-ResourceConfig #1 associated with CSI-ReportConfig #1 includes NZP-CSI-RS-Resource #1, NZP-CSI-RS-Resource #2, and NZP-CSI-RS-Resource #3 corresponding to DL BWP #1, DL BWP #2, and DL BWP #3, respectively. When the UE receives the aperiodic or semi-static trigger for CSI-ReportConfig #1, beams on DL BWP#1, DL BWP#2 and DL BWP#3 may be measured and reported.

For example, the pseudocode for the RRC parameter in 38.331 may be modified as follows (where the underlined part shows the modification).

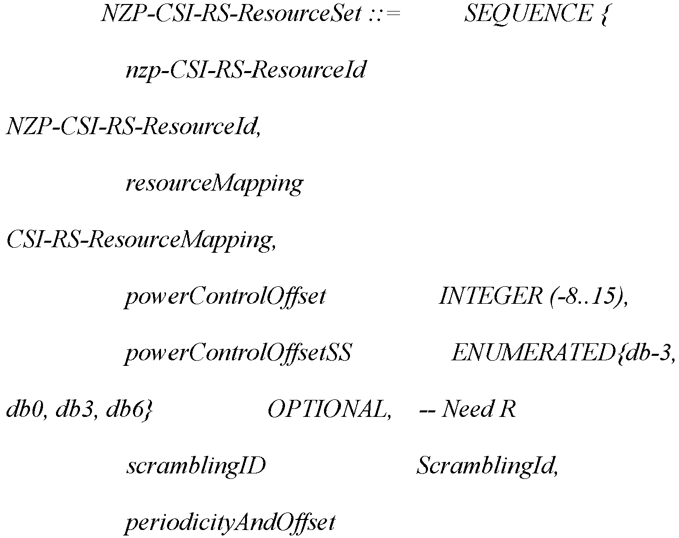

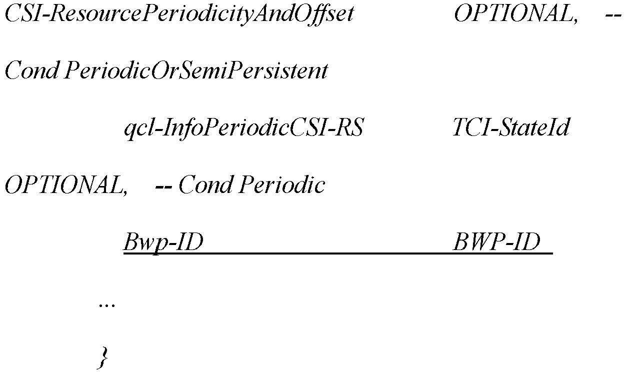

It should be understood that the above-mentioned Figures 3 to 5 and the pseudocodes are examples and are non-restrictive.

In summary, the electronic apparatus 100 according to this embodiment can implement measurement and reporting of the beams on multiple BWPs by improving the CSI framework, without increasing the complexity of the UE.

### <Second Embodiment

In this embodiment, an example in which the UE measures and reports beams on multiple BWPs or a beam on a BWP that is currently non-activated is described in detail according to two cases. In a first case, the UE can activate only one BWP. In a second case, the UE can activate multiple BWPs.

It should be understood that in a case that the UE can activate only one BWP and is required to feedback CSI on a BWP that is currently non-activated, the UE is required to switch to the BWP that is currently non-activated, so as to perform monitoring of PDCCH, receiving of PDSCH and the like on the BWP

In particular, for example in NTN, for BWPs other than an initial BWP, each of BWPs only has a specific beam transmitting thereon, and all beams transmit on the initial BWP, as shown in Figure 6. Each cell has 8 beams, the frequency reuse factor is FRF=3, and different beams are represented by different patterns. It can be seen that a beam denoted by F1 only transmits on BWP 1, a beam denoted by F2 only transmits on BWP 2. All beams perform SSB/SIB transmission on the initial BWP, and may also perform CSI-RS transmission, or may not perform CSI-RS transmission.

In other words, within a certain period of time, for example, a period of time from a time instant when the RRC configuration is finished to a next time of the RRC configuration, the beam is bound to the BWP besides the initial BWP. In this case, each time a beam is measured, it is required to perform BWP switching once and a measurement result report, increasing latency and overhead, and the measurement result is inaccurate due to aging.

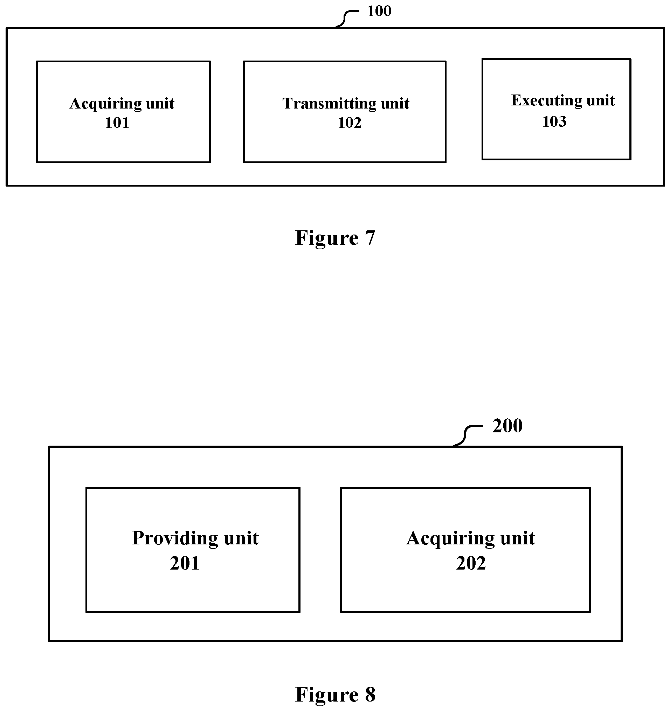

In view of this, an electronic apparatus 100 is provided according to the present embodiment. In addition to the various units described in the first embodiment, as shown in Figure 7, the electronic apparatus 100 further includes an executing unit 103. The executing unit 103 is configured to switch to the BWP that is currently non-activated to measure a beam on the BWP that is currently non-activated, when it is determined, based on the CSI report configuration, to measure a beam on the BWP that is currently non-activated, and switch back to a BWP that is currently activated after the measurement is completed.

Note that although an example of a scenario in which the BWP is bound to the beam is given above, the solution according to the second embodiment is not limited thereto, and is also applicable to a scenario in which the BWP is not bound to a beam.

For example, the executing unit 103 may switch sequentially, in a case of determining to measure a beam on the multiple BWPs that are currently non-activated, to the multiple BWPs that are currently non-activated to perform beam measurement, and transmit to the base station a beam measurement result on an uplink BWP indicated in the CSI report configuration after all beam measurement are finished. For example, assuming that DL BWP currently activated for the UE is BWP#3, the UE receives an aperiodic CSI trigger, the reference signals corresponding to the CSI trigger are located on BWP#1 and BWP#2, respectively, and the UE would perform the following operations: switch to BWP#1 to measure a beam on BWP#1; switching to BWP#2 to measure a beam on BWP#2; and switching back to BWP#3 to continue to monitor the PDCCH and receive the PDSCH, and reporting according to the measurement results of DL BWP#1 and BWP#2 on the UL BWP indicated in the CSI report configuration. For the aperiodic CSI trigger, various CSI frameworks described in the first embodiment may be adopted, which are not repeated here.

In this way, the measurement results may be reported once after the measurement is performed multiple times, thereby reducing signaling overhead and latency. In addition, the beam measurement result may include only the beam ID, or may include the beam ID and reference signal received power (RSRP) corresponding to the beam ID. In a case that only the beam ID is reported, only a beam ID with the largest RSRP or a beam ID with RSRP exceeding a certain threshold may be reported. In a case that the beam ID and the RSRP corresponding to the beam ID are reported, an absolute value of the RSRP of the beam with the largest RSRP and a relative value of the RSRP of other beams may be reported. The measurement result is reported once, and thus may be reported in flexible and diverse forms, thereby further reducing signaling overhead.

Alternatively, the executing unit 103 may switch to the initial BWP to measure a beam when it is determined to measure beams on the multiple BWPs that are currently non-activated. This is because all beams transmit on the initial BWP

In another example, the CSI report configuration is associated with the CSI resource configuration for the resource configuration of the reference signal on the initial BWP. The executing unit 103 is configured to switch to the initial BWP to measure a beam and report a measurement result for the initial BWP. It should be noted that operations such as measurement and switching (and activation described later) herein are for a downlink BWP, and do not impose any restriction on an uplink BWP for reporting the measurement result. For example, the CSI report configuration may also indicate to report the beam measurement result on the initial BWP. In other words, the base station instructs to measure the beam on the initial BWP. In this case, the UE switches to the initial BWP to measure all beams indicated, and then switches back to the BWP that is currently activated. For example, the UE may switch back to the BWP that is currently activated after the measurement is completed, or after the measurement result reporting is completed, or at any time instant therebetween, which is not limited.

For example, assuming that in CSI report configuration #1, the UE is configured to report CSI on UL BWP #1, the BWP corresponding to this CSI report configuration #1 is DL BWP #0 (i.e., the initial BWP). When the UE receives an aperiodic trigger for this CSI report configuration #1 on the DL BWP #1 that is currently activated, the UE performs BWP switching to switch to the initial BWP. After measurement of the beam on the initial BWP is completed, the UE reports the measurement result on UL BWP #1, and switches back to DL BWP #1.

For example, the reference signal on the initial BWP may be pre-configured by the base station, for example, through RRC signaling. For example, the reference signal on the initial BWP may be a part or all of the reference signals of candidate beams configured in the beam failure recovery. In a case that the CSI report is periodic, the UE measures the beam and reports the measurement result based on all the configured reference signals. In a case that the CSI report is semi-static, the base station may indicate a part of the reference signals through the MAC CE, and the UE measures the beam and reports the measurement result based on the indicated part of reference signals. In a case that the CSI report is triggered aperiodically, the base station may indicate a part of the reference signals through DCI, and the UE measures the beam and reports the measurement result based on the indicated part of the reference signals.

In order to perform the BWP switching, the UE may acquire an explicit BWP switching instruction from the base station. Alternatively, the BWP switching can be performed based on an implicit BWP switching instruction.

In an implicit manner, the executing unit 103 is configured to perform the switching between BWPs at a predetermined timing. For example, the executing unit 103 automatically switches, when determining based on the CSI report configuration indicated in the aperiodic trigger or the semi-static trigger to measure a beam on a BWP that is currently non-activated, to the BWP that is currently non-activated at predetermined timing, and switches back to a BWP that is currently activated after completing the measurement on the BWP that is currently non-activated.

The predetermined timing may be determined based on one or more of the following: specific signaling between the base station and the UE, and a predetermined or specified timing relationship. For example, in the case of aperiodic trigger, the UE may perform BWP switching after X slots from receiving the trigger, and perform BWP switching after Y slots from feeding back the CSI report. In the case of semi-static trigger, the UE performs the BWP switching when X slots pass since receipt of the PDSCH containing the MAC CE or when x slots pass since feedback of the ACK of the PDSCH, depending on the situation of the harq feedback disable in the system. In the case of periodic trigger, the UE may perform BWP switching when X slots pass since the start of one period, and performs BWP switching when Y slots pass since feedback of the CSI report, and the like. Here, x, X, and Y may be specified by the base station, or may be agreed by the base station and the UE in advance.

In an explicit manner, the UE receives a BWP switching instruction and a report instruction from the base station, performs the switch in response to the BWP switching instruction, and reports the measurement result in response to the report instruction.

In the case of switching to the initial BWP, the acquiring unit 101 is configured to acquire a first switching instruction from the base station. The first switching instruction instructs to switch from a BWP that is currently activated to the initial BWP. The UE switches to the initial BWP in response to the first switching instruction. The acquiring unit 101 is further configured to acquire a CSI request from the base station on the initial BWP. The UE reports the measurement result in response to the CSI request. In addition, the acquiring unit 101 is further configured to acquire a second switching instruction from the base station. The second switching instruction instructs to switch from the initial BWP to the BWP that is currently activated. The UE switches back to the BWP that is currently activated in response to the second switching instruction. Note that the base station may transmit the second switching instruction immediately after transmitting the CSI request, or may transmit the second switching instruction after receiving the reported measurement result.

It should be noted that the first, the second and the like in the present disclosure are only used for distinguishing, and do not imply any meaning of order.

In the case of switching to another BWP that is currently non-activated, the acquiring unit 101 is configured to, for each of the multiple BWPs that are currently non-activated: acquire a first BWP switching instruction from the base station, where the first BWP switching instruction instructs to switch from the BWP that is currently activated to a BWP that is non-activated; acquire the CSI request and an indication indicating whether to report the beam measurement result from the base station on the BWP that is non-activated. The acquiring unit 101 acquires an indication for reporting the beam measurement result and a second BWP switching instruction from the base station after the beam measurement on the multiple BWPs that are currently non-activated is completed. The second BWP switching instruction instructs to switch from a BWP that is non-activated to a BWP that is currently activated.

According to this configuration, the UE switches sequentially to the respective BWPs that are non-activated to perform beam measurement; transmits, in response to the instruction for reporting a measurement result received from the base station, the beam measurement result to the base station after all the measurements are completed; and switches, in response to the second BWP switching instruction, back to the BWP that is currently activated.

For example, assuming that the base station requests for a measurement result of a reference signal on BWP#1 that is non-activated and a measurement result of a reference signal on BWP#2 that is non-activated by the UE, the base station and the UE perform the following operations. The base station transmits the first BWP switching instruction to the UE. The UE switches to BWP#1. The base station transmits the CSI request on BWP#1 to the UE, and instructs the UE not to report a measurement result. The base station transmits the first BWP switching instruction to the UE. The UE switches to BWP#2. The base station transmits the CSI request on the BWP#2 to the UE, and instructs the UE to report a measurement result. The UE performs comprehensive feedback based on the measurement results respectively on BWP#1 and BWP#2. Details for the feedback format have been given in the above and thus are not described here.

Alternatively, in the case of switching to another BWP that is currently non-activated, the acquiring unit 101 can also be configured to: for multiple BWPs that are currently non-activated, acquire the first BWP switching instruction from the base station, where the first BWP switching instruction instructs to switch from the BWP that is currently activated to each of the multiple BWPs that are non-activated in a certain order. The acquiring unit 101 acquires a second BWP switching instruction from the base station after the measurement on all the multiple BWPs that are currently non-activated is completed. The second BWP switching instruction instructs to switch from a BWP that is non-activated to a BWP that is currently activated.

For example, assuming that the base station requests a measurement result of a reference signal on BWP#1 that is non-activated and a measurement result of a reference signal on BWP#2 that is non-activated by the UE, the base station and the UE perform the following operations. The base station transmits the first BWP switching instruction to the UE. The first BWP switching instruction instructs to switch from a BWP that is currently activated to BWP#1 and then to BWP#2. The UE performs the switch successively to BWP#1 and BWP#2 to perform the beam measurement, and performs comprehensive feedback based on the measurement results respectively on BWP#1 and BWP#2. Details for the feedback format have been given in the above and thus are not described here.

In another case, the UE may activate multiple BWPs (referred to here as the downlink BWPs) at the same time. In this embodiment, it can be achieved by activating the multiple BWPs in various ways. Information on the number of BWPs that can be activated by the UE at the same time may be provided by the UE to the base station. For example, the information on the number of BWPs may be reported as a separate parameter (e.g., as a part of capability information of the UE). Alternatively, the number of BWPs may be considered jointly with the number of component carriers (CC) in the reference signal used for mobility management that can be supported by the UE at the same time, as a kind of overall capability information. For example, in a case that a sum of the number of CCs in the reference signal used for mobility management that can be supported by the UE at the same time and the number of BWPs that can be activated at the same time remains constant, the number of CCs in the reference signal used for mobility management may be reduced correspondingly when the number of BWPs that can be activated at the same time, which helps to not to increase the complexity of UE.

For example, the executing unit 103 is configured to determine, when determining based on the CSI report configuration to measure a beam on a BWP that is currently non-activated, the BWP that is currently non-activated as a secondary activated BWP, so as to perform beam measurement on the secondary activated BWP. For the sake of distinguishing below, the BWP that is currently activated is referred to as a primary activated BWP. The UE performs operations such as monitoring of PDCCH and receiving of PDSCH on the primary activated BWP, and performs only beam measurement operation on the secondary activated BWP. That is, the UE only reports the CSI for the secondary activated BWP.

Further, the executing unit 103 is configured to activate a BWP that is currently non-activated as a secondary activated BWP, so that beam measurement can be performed on the secondary activated BWP. The secondary activated BWP is deactivated after the measurement is completed.

In a case of determining to measure beams on multiple BWPs that are currently non-activated, the executing unit 103 may transmit, to the base station the beam measurement result on the uplink BWP indicated in the CSI report configuration after the beam measurement on all secondary activated BWPs is completed. For example, assuming that the BWP currently activated by the UE is BWP #1, and the UE is to measure and report BWP #2 and BWP #3 that are currently non-activated according to the CSI report configuration, the UE activates BWP #2 to a secondary activated state, performs beam measurement on BWP #2, and deactivates BWP #2 to a non-activated state after the measurement is completed. Similarly, the UE performs the same operation on BWP #3. After the measurement of BWP #2 and BWP #3 is completed, the UE performs reporting based on all the measurement results.

For example, resource IDs of the RSs to be measured on different secondary activated BWPs may be different from each other, and in such a case, the beam measurement result includes the resource ID of the RS. In a case that the resource IDs of the RSs to be measured on different secondary activated BWPs are the same, in addition to the resource ID of the RS, the beam measurement result also includes information indicating the ID of the corresponding BWP, such as the ID of the aforementioned CSI-ResourceConfig or the ID of NZP- CSI-RS-Resourceset, so that the base station identifies a BWP corresponding to the beam. Details related to this have been given in the first embodiment, and thus are not repeated here.

In addition, the base station may also configure a reference signal on the initial BWP for the UE, so that the UE performs beam measurement on the initial BWP. In this case, the CSI report configuration (which is the triggered CSI report configuration in semi-static or aperiodic trigger) is associated with the CSI resource configuration including the resource configuration for the reference signal on the initial BWP. The initial BWP is a secondary activated BWP. The executing unit 103 performs beam measurement on the initial BWP, and transmits the beam measurement result on the uplink BWP indicated in the CSI report configuration. For example, the BWP currently activated by the UE is BWP #1. The UE receives, on BWP #1, an aperiodic trigger for CSI-ReportConfig #1. CSI-ReportConfig #1 indicates to report CSI on UL BWP #1, and the BWP corresponding to CSI-ResourceConfig associated with CSI-ReportConfig #1 is the initial BWP (DL BWP #0). The UE activates the initial BWP as a secondary activated BWP, performs beam measurement on the initial BWP, and reports the measurement result on UL BWP #1 after the measurement is completed.

For example, the reference signal on the initial BWP may be a part or all of the reference signals of candidate beams configured in the beam failure recovery. After configuring the reference signal on the initial BWP for the UE through RRC signaling, the base station may select a part of reference signals through MAC CE activation and/or through DCI indication for the UE to perform measurement and reporting. In addition, for the periodic CSI report, the UE may measure and report all configured reference signals.

The activation and deactivation of BWP may be performed in an explicit or implicit manner.

In the implicit manner, the executing unit 103 is configured to automatically activate and deactivate a BWP that is currently non-activated indicated in the CSI report configuration. For example, when it is determined to measure a beam on a BWP that is currently non-activated, the BWP that is currently non-activated is activated as a secondary activated BWP by default, and is automatically deactivated to a non-activated state after the measurement is completed. For example, assuming that BWP #1 is currently activated, the UE receives an aperiodic trigger for the CSI report configuration on BWP #1, and the CSI resource corresponding to the CSI report configuration is on BWP #2. In this case, BWP #2 is automatically activated as the secondary activated BWP, and automatically becomes the non-activated BWP from the secondary activated BWP after the measurement ends.

In the explicit manner, the acquiring unit 101 is configured to acquire an activation instruction and a deactivation instruction from the base station. For example, the acquiring unit 101 may acquire the activation instruction or deactivation instruction through RRC configuration, MAC CE activation or DCI indication.

For example, at most four BWPs can be configured through RRC, one of which is the initial BWP (BWP #0), another of which is the BWP #1 that is currently used, and the remaining of which are BWP #2 and BWP #3 respectively. When the UE receives a trigger for measuring the beams on BWP #2 and BWP #3, the base station activates each of BWP #2 and BWP #3 as a secondary activated BWP through DCI.

In summary, the electronic apparatus 100 according to the present embodiment can implement the measurement and reporting of the beams on multiple BWPs without increasing the complexity of the UE, while reducing the signaling overhead and latency.

### <Third Embodiment>

Figure 8 shows a block diagram of functional modules of an electronic apparatus 200 according to another embodiment of the present disclosure. As shown in Figure 8, the electronic apparatus 200 includes: a providing unit 201 and an acquiring unit 202. The providing unit 201 is configured to provide UE with a CSI resource configuration and a CSI report configuration. The CSI report configuration is associated with one or more CSI resource configurations. The CSI resource configuration includes resource configuration for the reference signal on one or more BWPs. The acquiring unit 202 is configured to acquire, based on the CSI report configuration, a beam measurement result of a beam corresponding to a reference signal specified in the CSI resource configuration associated with the CSI report configuration from the UE. The beam measurement result is obtained by measuring the reference signal.

The providing unit 201 and the acquiring unit 202 may be implemented by one or more processing circuitry. The processing circuitry may be implemented, for example, as a chip. Moreover, it should be understood that various functional units in the apparatus shown in Figure 8 are only logical modules defined based on their specific functions, and are not intended to limit a specific implementation.

The electronic apparatus 200 may be arranged on the side of a base station or may be communicatively connected to the base station. Here, it should be noted that the electronic apparatus 200 may be implemented in a chip level or in a device level. For example, the electronic apparatus 200 may operate as the base station itself, and may further include an external device such as a memory and a transceiver (not shown). The memory may be configured to store programs to be executed by the base station to implement various functions and related data information. The transceiver may include one or more communication interfaces to support communications with different devices (for example, user equipment, another base station and the like). Implementations of the transceiver are not limited herein.

For example, the providing unit 201 may provide the CSI resource configuration and the CSI report configuration via RRC signaling. The CSI resource configuration is configured to configure a reference signal to be measured. The CSI report configuration is configured to configure a way of reporting a beam measurement result. The CSI resource may be periodic, semi-static or aperiodic. Correspondingly, the CSI report may be periodic, semi-static or aperiodic.

The reference signal described herein includes, but is limited to, the CSI-RS or the SSB. In the following description, the CSI-RS is taken as an example. However, it should be understood that the description is also applicable to other downlink reference signals and is non-restrictive.

For the periodic manner, the UE periodically measures the reference signal (corresponding to a beam) configured in the CSI resource configuration, and the acquiring unit 202 acquires the beam measurement result from the UE based on the CSI report configuration.

For the semi-static or aperiodic CSI manner, the providing unit 201 is further configured to transmit an aperiodic trigger or a semi-static trigger for the CSI report configuration to the UE, for the UE to measure the beam and transmit the beam measurement result based on the CSI report configuration indicated in the aperiodic trigger or the semi-static trigger. For example, the aperiodic trigger or semi-static trigger indicates to measure at least a part of reference signals configured in the CSI resource configuration and report the measurement result. The CSI resource configuration associated with the CSI report configuration is required to be indicated in the CSI report configuration.

Referring back to Figure 2, for example, in the case of aperiodic trigger, the providing unit 201 transmits a CSI aperiodic trigger state list to the UE, for example, through DCI, where each state contains a list of the associated CSI report configuration (CSI-ReportConfig). In the case of semi-static trigger, the providing unit 201 transmits a list of CSI semi-static trigger states to the UE, for example, through MAC CE, where each state contains one associated CSI-ReportConfig.

In order to enable the UE to measure and report beams on multiple BWPs, the CSI framework of Figure 2 is improved in this embodiment as follows. One CSI-ReportConfig may be associated with one or more CSI-ResourceConfigs, and the CSI-ResourceConfig includes a resource configuration for a reference signal on one or more BWPs.

In a first example, the CSI report configuration is associated with multiple CSI resource configurations, and each CSI resource configuration is configuration for one BWP. Figure 3 shows an example of the CSI framework in this case. It can be seen that the resources of reference signals configured in respective CSI resource configurations are on one BWP (with the same DL-BWP-ID). In a case that the DL-BWP-IDs in the respective CSI resource configurations are different, the CSI report configuration is associated with the resource configuration of reference signals on multiple BWPs, so as to report the beam measurement result on the multiple BWPs.

In a second example, the CSI report configuration is associated with one CSI resource configuration. Each CSI resource configuration includes multiple CSI resource sets. Each CSI resource set corresponds to one BWP. Figure 4 shows an example of the CSI framework in this case. It can be seen that each CSI resource set in the CSI resource configuration includes a DL-BWP-ID field. The DL-BWP-ID field indicates that the resource of the reference signal in the resource set is on the BWP corresponding to the ID. In a case that the DL-BWP-IDs in the multiple CSI resource sets are different from each other, the CSI report configuration may be associated with the resource configuration of reference signals on multiple BWPs, so as to report the beam measurement result on the multiple BWPs. Note that the NZP-CSI-RS resource set is shown in Figure 4 as an example, but this is non-restrictive. The present solution is also applicable to resource sets of another reference signal.

In the third example, the CSI report configuration is associated with one CSI resource configuration. Each CSI resource configuration includes multiple CSI resource sets. Each CSI resource within each CSI resource set corresponds to one BWP respectively. Figure 5 shows an example of the CSI framework in this case. It can be seen that each CSI resource within each CSI resource set in the CSI resource configuration includes a DL-BWP-ID field. The DL-BWP-ID field indicates that the resource of the corresponding reference signal is on the BWP corresponding to the ID. In a case that the DL-BWP-IDs in CSI resources are different, the CSI report configuration may be associated with the resource configurations of reference signals on multiple BWPs, so as to report the beam measurement result on the multiple BWPs. Similarly, although the NZP-CSI-RS resource is shown in Figure 5 as an example, this is non-restrictive. The present solution may also be applicable to resources of another reference signal.

The above three examples have been described in detail in the first embodiment, and are also applicable to the third embodiment and thus are not repeated here.

In the third embodiment, an example in which the base station acquires the beam measurement result from the UE is described in detail according to two cases. In a first case, the UE can only activate one BWP. In a second case, the UE can activate multiple BWPs.

It should be understood that in a case that the UE can only activate one BWP and is required to feed back CSI on a BWP that is currently non-activated, the UE is required to switch to the BWP that is currently non-activated, so as to perform monitoring of PDCCH, receiving of PDSCH and the like on the BWP

In particular, for example in NTN, for BWPs other than an initial BWP, each of BWPs only has a specific beam transmitting thereon, and all beams transmit on the initial BWP, as shown in Figure 6. That is, within a certain period of time, for example, a period of time from a time instant when the RRC configuration is finished to a next time of RRC configuration, the beam is bound to the BWP besides the initial BWP. In this case, each time a beam is measured, BWP switching is to be performed once and a measurement result is reported, increasing latency and overhead, and the measurement result is inaccurate due to aging.

In view of this, an electronic apparatus 100 is provided according to the present embodiment, to instruct the UE to switch among multiple BWPs so as to perform beam measurement, and report the measurement result only once collectively. Note that although an example of a scenario in which the BWP is bound to the beam is given above, the solution according to the second embodiment is not limited thereto, and is also applicable to a scenario in which the BWP is not bound to a beam.

For example, in a case that the CSI report configuration indicates to measure beams on one or more BWPs that are currently non-activated, for each of the one or more BWPs that are currently non-activated, the providing unit 201 is configured to: transmit a first switching instruction to the UE, where the first switching instruction instructs the UE to switch from a BWP that is currently activated to a BWP that is non-activated; transmit to the UE a CSI request on the BWP that is non-activated and an indication for indicating whether to report the beam measurement result. For a last BWP that is non-activated among the one or more BWPs that are currently non-activated, the providing unit 201 transmits to the UE an indication for reporting the beam measurement result. In addition, the providing unit 201 also transmits a second switching instruction to the UE. The second switching instruction instructs the UE to switch from a BWP that is non-activated to a BWP that is currently activated.

The UE performs operations such as the switch of BWPs, reporting of the beam measurement result, and a switch back to the BWP that is currently activated in response to the first switching instruction, the CSI request, the indication for indicating whether to report the beam measurement result, the second switching instruction, and the like. It can be seen that in the case of multiple BWPs that are currently non-activated, the indication indicating whether to report the beam measurement result transmitted for the BWP that is non-activated except the last BWP that is non-activated is an indication representing No, so that the UE reports the beam measurement result collectively after all measurements are completed.

In addition, in a case that the CSI report configuration indicates to measure the beams on multiple BWPs that are currently non-activated, the providing unit 201 may also be configured to: for the multiple BWPs that are currently non-activated, transmit a first BWP switching instruction to the UE, where the first BWP switching instruction instructs the UE to switch from a BWP that is currently activated to each of the multiple BWPs that are non-activated in a certain order. Similarly, the UE reports the measurement result after the measurement on all BWPs is completed. In addition, the providing unit 201 is further configured to transmit a second BWP switching instruction to the UE. The second BWP switching instruction instructs the UE to switch from a BWP that is non-activated to a BWP that is currently activated.

According to this example, the UE reports the measurement result only once after performing the measurement multiple times, thereby reducing signaling overhead and latency. In addition, the measurement result is reported once, and thus may be reported in flexible and diverse forms, thereby further reducing signaling overhead. Details related to this have been described in the second embodiment, and are not repeated here.

Furthermore, in another example, the CSI report configuration is associated with the CSI resource configuration for resource configuration of the reference signal on the initial BWP. In other words, the base station configures, activates or instructs the CSI report configuration corresponding to the CSI resource configuration related to the initial BWP for the UE. In this case, the CSI report configuration may also indicate to report the beam measurement result on the initial BWP. Of course, the present disclosure does not limit the uplink BWP used for reporting the measurement result.

The UE switches to the initial BWP to measure all the indicated beams and report the measurement result. In addition, the UE further switches back to the BWP that is currently activated.

Accordingly, the providing unit 201 is configured to transmit a first switching instruction to the UE, where the first switching instruction instructs the UE to switch from a BWP that is currently activated to the initial BWP; transmit the CSI request on the initial BWP to the UE; and transmit a second switching instruction to the UE, where the second switching instruction instructs the UE to switch from the initial BWP to the BWP that is currently activated. It can be seen that since all measurements are performed on the initial BWP, the UE only needs to perform BWP switching once, and reports the measurement result after the measurement is completed.

For example, the reference signal on the initial BWP may be pre-configured by the base station, for example, through RRC signaling. For example, the reference signal on the initial BWP may be a part or all of the reference signals of candidate beams configured in the beam failure recovery.

In another case, the UE may activate multiple BWPs (referred to as downlink BWPs herein) at the same time. In this embodiment, the multiple BWPs are activated in various ways to achieve this point. Information on the number of BWPs that can be activated by the UE at the same time may be acquired by the base station from the UE. As described above, the information on the number of BWPs may be reported as a separate parameter. Alternatively, the number of BWPs may be considered jointly with the number of CCs in the reference signal used for mobility management that can be supported by the UE at the same time, as a kind of overall capability information.

For example, the providing unit 201 is configured to transmit an activation instruction or deactivation instruction to the UE to activate a BWP that is currently non-activated as a secondary activated BWP or deactivate the BWP, in a case that the CSI report configuration indicates to measure the beam on the BWP that is currently non-activated.

For the sake of distinguishing, the BWP that is currently activated is referred to as a primary activated BWP. The UE performs operations such as monitoring of PDCCH, receiving of PDSCH and the like on the primary activated BWP, and performs only beam measurement operation on the secondary activated BWP. That is, the UE reports the CSI only for the secondary activated BWP.

In the case that the CSI report configuration indicates to measure beams on multiple BWPs that are currently non-activated, the UE sequentially activates the multiple BWPs that are currently non-activated as secondary activated BWPs, performs beam measurement, deactivates the secondary activated BWPs, and reports the beam measurement result to the base station after all measurements are completed. Accordingly, the providing unit 201 may sequentially activate and deactivate the multiple BWPs that are currently non-activated.

In addition, the base station may further configure a reference signal on the initial BWP for the UE, for the UE to perform beam measurement on the initial BWP. In this case, the initial BWP is the secondary activated BWP. For example, the reference signal on the initial BWP may be a part or all of the reference signals of candidate beams configured in the beam failure recovery. After configuring the reference signal on the initial BWP for the UE through RRC signaling, the base station may select a part of reference signals through MAC CE activation and/or through DCI indication for the UE to perform measurement and reporting. In addition, for periodic CSI reporting, the UE may measure and report all configured reference signals.

For example, the providing unit 201 may transmit the activation instruction or deactivation instruction through RRC configuration, MAC CE activation or DCI indication. For example, at most four BWPs can be configured through RRC, one of which is the initial BWP (BWP #0), another of which is the BWP #1 that is currently used, and the other two of which are BWP #2 and BWP #3 respectively. In a case that the CSI report configuration indicates that the beams on BWP #2 and BWP #3 are to be measured, the base station transmits activation and deactivation indications for BWP #2 and BWP #3 through DCI.

In summary, the electronic apparatus 200 according to the third embodiment can implement measurement and reporting of the beams on multiple BWPs by improving the CSI framework, without increasing the complexity of the UE while reducing signaling overhead and latency.

### <Fourth Embodiment

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

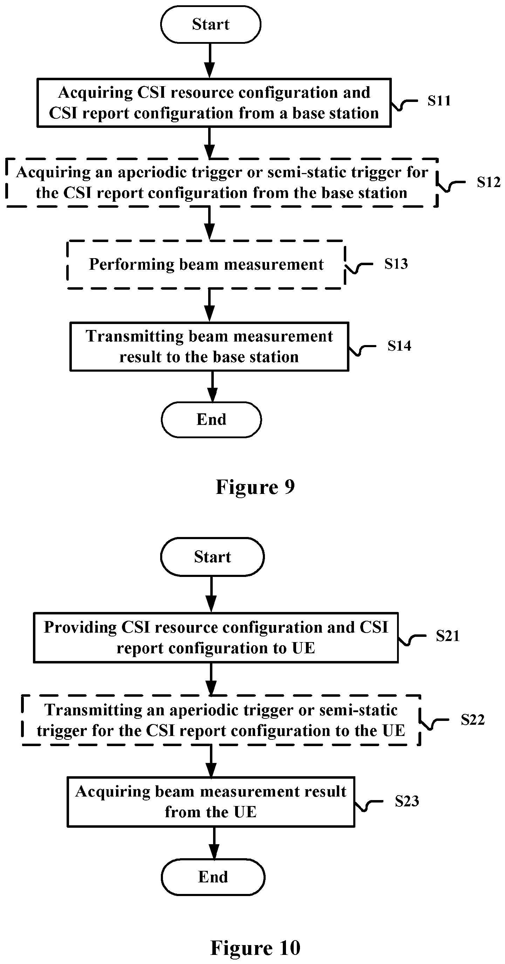

Figure 9 is a flowchart showing a method for wireless communications according to an embodiment of the present disclosure. The method includes: acquiring a CSI resource configuration and a CSI report configuration from a base station (S11), where the CSI report configuration is associated with one or more CSI resource configurations, and the CSI resource configuration includes a resource configuration for a reference signal on one or more BWPs; and transmitting, based on the CSI report configuration, a beam measurement result of a beam corresponding to a reference signal specified in the CSI resource configuration associated with the CSI report configuration to the base station, where the beam measurement result is obtained by measuring the reference signal (S14). The method, for example, may be performed at the side of UE.

For example, the reference signal may be a channel state information reference signal or a synchronizing signal block.

As shown in the dashed line block in Figure 9, the above method may further include a step S13: acquiring an aperiodic trigger or semi-static trigger for the CSI report configuration from the base station, and performing beam measurement and transmission of the beam measurement result based on the CSI report configuration indicated in the aperiodic trigger or the semi-static trigger. For example, the aperiodic trigger or semi-static trigger may indicate to perform beam measurement and reporting of the measurement result on at least a part of the reference signals configured in the CSI resource configuration.

In an example, the CSI report configuration is associated with multiple CSI resource configurations, and each CSI resource configuration is configuration for one BWP. In another example, the CSI report configuration is associated with one CSI resource configuration, each CSI resource configuration includes multiple CSI resource sets, and each CSI resource set corresponds to one BWP. In another example, the CSI report configuration is associated with one CSI resource configuration, each CSI resource configuration includes multiple CSI resource sets, and each CSI resource within each CSI resource set corresponds to one BWP

As an example of an application scenario, the method may be applied to NTN. For example, for a BWP other than an initial BWP, each BWP only has a specific beam transmitting thereon, and all beams transmit on the initial BWP.

As shown in another dashed line block in Figure 9, the above method may further include a step S13: performing beam measurement. In an example, in step S13, in a case of determining based on the CSI report configuration to measure a beam on a BWP that is currently non-activated, the BWP that is currently non-activated is determined as a secondary activated BWP to perform beam measurement on the secondary activated BWP. For example, the BWP that is currently non-activated may be activated as the secondary activated BWP, so as to perform the beam measurement on the secondary activated BWP, and the secondary activated BWP is deactivated after the measurement is completed.

For example, the BWP that is currently non-activated indicated in the CSI report configuration may be automatically activated and deactivated. Alternatively, it is also possible to acquire an activation instruction and a deactivation instruction from the base station. For example, the activation instruction or deactivation instruction may be acquired through RRC configuration, MAC CE activation or DCI instruction.

For step S14, in a case of determining to measure beams on the multiple BWPs that are currently non-activated, the beam measurement result may be transmitted to the base station on an uplink BWP indicated in the CSI report configuration after the beam measurement on all secondary activated BWPs is completed. For example, the resource identifiers of the reference signals to be measured on different secondary activated BWPs are different, and the beam measurement result includes the resource identifier of the reference signal. In a case that the resource identifiers of the reference signals to be measured on different secondary activated BWPs are the same, the beam measurement result includes the resource identifier of the reference signal and information indicating the identifier of the corresponding BWP.

In addition, in a case that the CSI report configuration is associated with CSI resource configuration including resource configuration for the reference signal on the initial BWP, the initial BWP is the secondary activated BWP. The beam measurement is performed on the initial BWP in step S13, and the beam measurement result is transmitted on the uplink BWP indicated in the CSI report configuration in step S14. For example, the reference signal on the initial BWP may be a part or all of the reference signals of candidate beams configured in the beam failure recovery.

In another example, in step S13, in a case of determining based on the CSI report configuration to measure the beam on the BWP that is currently non-activated, a switch to the BWP that is currently non-activated is performed to perform beam measurement on the BWP that is currently non-activated, and a switch back to the BWP that is currently activated is performed after the measurement is completed. For example, the switch among BWPs may be performed at predetermined timing.

In addition, in a case that the CSI report configuration is associated with CSI resource configuration including resource configuration for the reference signal on the initial BWP, the UE is caused to switch to the initial BWP to perform beam measurement and report a measurement result for the initial BWP. Correspondingly, the above method further includes the following steps: acquiring a first BWP switching instruction from the base station, where the first BWP switching instruction instructs to switch from a BWP that is currently activated to the initial BWP; acquiring a CSI request from the base station on the initial BWP; acquiring a second BWP switching instruction from the base station, where the second BWP switching instruction instructs to switch from the initial BWP to the BWP that is currently activated. When the CSI request is acquired from the base station, the beam measurement result is transmitted to the base station. The reference signal on the initial BWP may be a part or all of the reference signals of candidate beam configured in the beam failure recovery.

In a case of determining to measure beams on the multiple BWPs that are currently non-activated, it is possible to switch sequentially to the multiple BWPs that are currently non-activated to perform beam measurement, and transmit the beam measurement result to the base station on the uplink BWP indicated in the CSI report configuration after all beam measurements are completed. The above method further includes: for each of the multiple BWPs that are currently non-activated: acquiring a first BWP switching instruction from the base station, where the first BWP switching instruction instructs to switch from the BWP that is currently activated to the BWP that is non-activated; acquiring the CSI request and an indication indicating whether to report a beam measurement result from the base station on the BWP that is non-activated, where an indication indicating to report a beam measurement result is acquired from the base station after the measurement on the multiple BWPs that are currently non-activated is completed; and acquiring a second BWP switching instruction from the base station, where the second BWP switching instruction instructs to switch from the BWP that is non-activated to the BWP that is currently activated.

Figure 10 is a flowchart showing a method for wireless communications according to another embodiment of the present disclosure. The method includes: providing a CSI resource configuration and a CSI report configuration to UE (S21), where the CSI report configuration is associated with one or more CSI resource configurations, and the CSI resource configuration includes resource configuration for a reference signal on one or more BWPs; and acquiring, based on the CSI report configuration, a beam measurement result of a beam corresponding to a reference signal specified in the CSI resource configuration associated with the CSI report configuration from the UE, where the beam measurement result obtained by measuring the reference signal (S23). The method, for example, is performed on the side of base station.

As shown in the dashed line block in Figure 10, the above method may further include a step S22: transmitting an aperiodic trigger or semi-static trigger for the CSI report configuration to the UE, for the UE to measure a beam and transmit a beam measurement result based on the CSI report configuration indicated in the aperiodic trigger or semi-static trigger. For example, the aperiodic trigger or semi-static trigger may indicate to measure at least a part of the reference signals configured in the CSI resource configuration, and report a measurement result.

In an example, the CSI report configuration is associated with multiple CSI resource configurations, and each CSI resource configuration is configuration for one BWP. In another example, the CSI report configuration is associated with one CSI resource configuration, each CSI resource configuration includes multiple CSI resource sets, and each CSI resource set corresponds to one BWP. In another example, the CSI report configuration is associated with one CSI resource configuration, each CSI resource configuration includes multiple CSI resource sets, and each CSI resource within each CSI resource set corresponds to one BWP

As an example of an application scenario, the method may be applied to NTN. For example, for a BWP other than an initial BWP, each BWP only has a specific beam transmitting thereon, and all beams transmit on the initial BWP.

In a case that the UE can activate multiple BWPs, the above method further includes: in a case that the CSI report configuration indicates to measure the beam on the BWP that is currently non-activated, transmitting an activation instruction and a deactivation instruction to the UE to activate a corresponding BWP that is currently non-activated as a secondary activated BWP or deactivate the secondary activated BWP. For example, the activation instruction or deactivation instruction may be transmitted through RRC configuration, MAC CE activation or DCI indication.

In a case that the UE can activate only one BWP, in an example, the CSI report configuration is associated with a CSI resource configuration including resource configuration for the reference signal on the initial BWP, the above method further includes: transmitting the first BWP switching instruction to the UE, where the first BWP switching instruction instructs the UE to switch from the BWP that is currently activated to the initial BWP; transmitting a CSI request on the initial BWP to the UE; transmitting a second BWP switching instruction to the UE, where the second BWP switching instruction instructs the UE to switch from the initial BWP to the BWP that is currently activated. For example, the reference signal on the initial BWP is a part or all of the reference signals of candidate beams configured in the beam failure recovery.

In another example, the CSI report configuration indicates to measure the beam on one or more BWPs that are currently non-activated, the method includes: for each of the one or more BWPs that are currently non-activated, transmitting a first BWP switching instruction to the UE, where the first BWP switching instruction instructs the UE to switch from a BWP that is currently activated to the BWP that is non-activated; transmitting a CSI request on the BWP that is non-activated and an indication indicating whether to report a beam measurement result to the UE, where an indication indicating to report the beam measurement result is transmitted to the UE for the last one of the one or more BWPs that are currently non-activated; and transmitting a second BWP switching instruction to the UE, where the second BWP switching instruction instructs the UE to switch from the BWP that is non-activated to the BWP that is currently activated.

The methods described above respectively correspond to the apparatus 100 described in the first embodiment and the second embodiment and the apparatus 200 described in the third embodiment. The specific details may be found in the description in the corresponding position above, and thus are not repeated here. It should be noted that the above methods may be performed in combination or separately.

The technology of the present disclosure may be applied to various products.

For example, the electronic apparatus 100 may be implemented as various user equipments. The user equipment may be implemented as a mobile terminal (such as a smartphone, a tablet personal computer (PC), a notebook PC, a portable game terminal, a portable/dongle type mobile router, and a digital camera), or an in-vehicle terminal (such as a car navigation device). The user equipment may also be implemented as a terminal (that is also referred to as a machine type communication (MTC) terminal) that performs machine-to-machine (M2M) communication. Furthermore, the user equipment may be a wireless communication module (such as an integrated circuit module including a single die) mounted on each of the terminals.

For example, the electronic apparatus 200 may be implemented as various base stations. The base station may be implemented as any type of evolved Node B (eNB) or gNB (5G base station). The eNB includes, for example, a macro eNB and a small eNB. The small eNB may be an eNB of a cell with coverage smaller than that of a macro cell, such as a pico-eNB, a micro-eNB and a household (femto) eNB. The gNB is similar to the eNB. Alternatively, the base station may be implemented as any other type of base stations, such as a NodeB and a base transceiver station (BTS). The base station may include a main body (also referred to as a base station device) configured to control wireless communications, and one or more remote radio heads (RRH) arranged in a different place from the main body. In addition, various types of user equipment may each serve as a base station by performing functions of the base station temporarily or semi-permanently.

### [Application Examples Regarding a Base Station]

### (First Application Example)

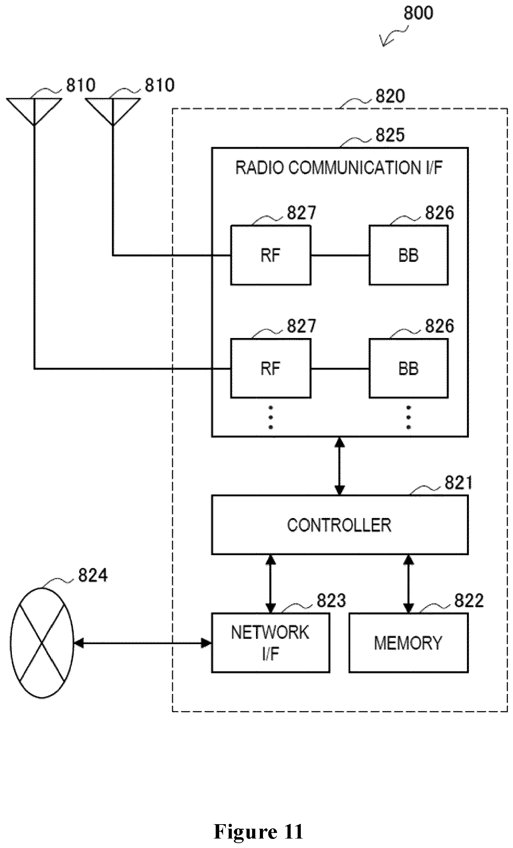

Figure 11 is a block diagram showing a first example of an exemplary configuration of an eNB or gNB to which the technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 11, the eNB 800 may include the multiple antennas 810. For example, the multiple antennas 810 may be compatible with multiple frequency bands used by the eNB 800. Although Figure 11 shows the example in which the eNB 800 includes the multiple antennas 810, the eNB 800 may include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. In a case that the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and perform various types of signal processing of layers (such as L1, Media Access Control (MAC), Radio Link Control (RLC), and a Packet Data Convergence Protocol (PDCP)). The BB processor 826 may have a part or all of the above-described logical functions, to replace the controller 821. The BB processor 826 may be a memory storing communication control programs, or a module including a processor and a related circuit configured to execute the programs. Updating the program may allow the functions of the BB processor 826 to be changed. The module may be a card or a blade inserted into a slot of the base station apparatus 820. Alternatively, the module may be a chip mounted on the card or the blade. Meanwhile, the RF circuit 827 may include, for example, a mixer, a filter, and an amplifier, and transmits and receives wireless signals via the antenna 810.

As shown in Figure 11, the radio communication interface 825 may include multiple BB processors 826. For example, the multiple BB processors 826 may be compatible with multiple frequency bands used by the eNB 800. The radio communication interface 825 may include multiple RF circuits 827, as shown in Figure 11. For example, the multiple RF circuits 827 may be compatible with multiple antenna elements. Although Figure 11 shows the example in which the radio communication interface 825 includes multiple BB processors 826 and multiple RF circuits 827, the radio communication interface 825 may include a single BB processor 826 and a single RF circuit 827.

In the eNB 800 shown in Figure 11, the providing unit 201, the acquiring unit 202, and a transceiver of the electronic apparatus 200 may be implemented by the radio communication interface 825. At least part of the functions may be implemented by the controller 821. For example, the controller 821 may implement the beam measurement and reporting on multiple BWPs of the UE by performing the functions of the providing unit 201 and the acquiring unit 202.

### (Second Application Example)

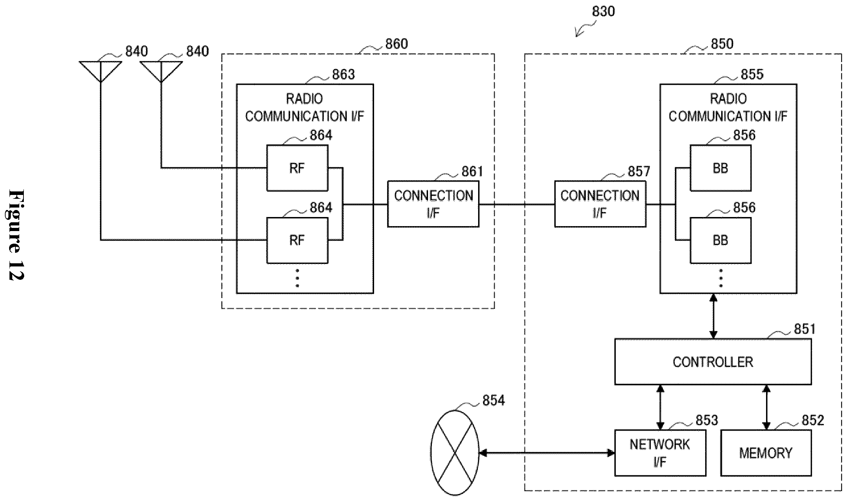

Figure 12 is a block diagram showing a second example of an exemplary configuration of an eNB or gNB to which the technology according to the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 12, the eNB 830 may include multiple antennas 840. For example, the multiple antennas 840 may be compatible with multiple frequency bands used by the eNB 830. Although Figure 12 shows the example in which the eNB 830 includes multiple antennas 840, the eNB 830 may include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 11.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 11, except that the BB processor 856 is connected to an RF circuit 864 of the RRH 860 via the connection interface 857. As show in Figure 12, the radio communication interface 855 may include multiple BB processors 856. For example, the multiple BB processors 856 may be compatible with multiple frequency bands used by the eNB 830. Although Figure 12 shows the example in which the radio communication interface 855 includes multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, an RF circuit 864. The RF circuit 864 may include, for example, a mixer, a filter and an amplifier, and transmits and receives wireless signals via the antenna 840. The radio communication interface 863 may include multiple RF circuits 864, as shown in Figure 12. For example, the multiple RF circuits 864 may support multiple antenna elements. Although Figure 12 shows the example in which the radio communication interface 863 includes multiple RF circuits 864, the radio communication interface 863 may include a single RF circuit 864.

In the eNB 830 shown in Figure 12, the providing unit 201, the acquiring unit 202, and a transceiver of the electronic apparatus 200 may be implemented by the radio communication interface 855 and/or the radio communication interface 863. At least part of the functions may be implemented by the controller 851. For example, the controller 851 may implement the beam measurement and reporting on multiple BWPs of the UE by performing the functions of the providing unit 201 and the acquiring unit 202.

### [Application examples regarding user equipment]

### (First Application Example)

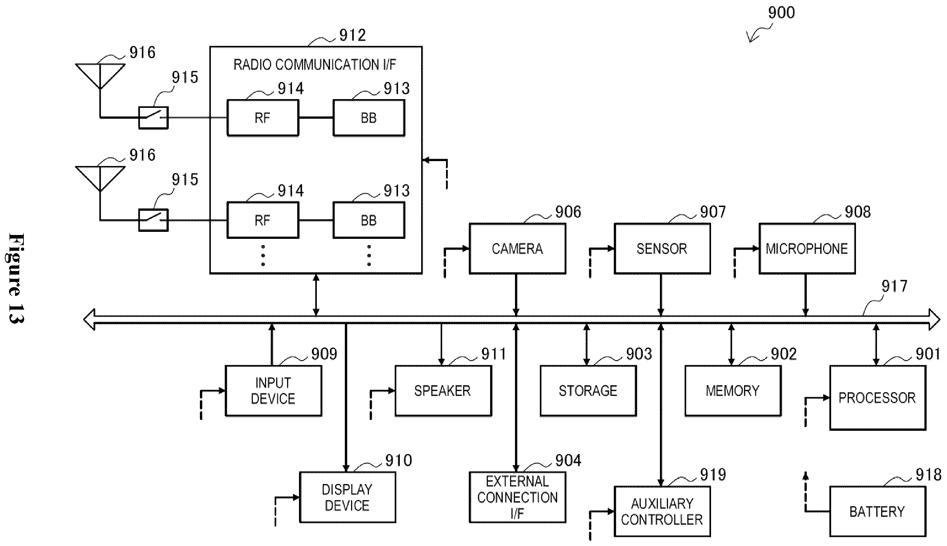

Figure 13 is a block diagram showing an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals outputted from the smartphone 900 to sounds.

The radio communication interface 912 supports any cellular communication scheme (such as LTE and LTE-advanced), and performs wireless communications. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 13 shows a case that one RF link is connected to one antenna, which is only illustrative, and a situation where one RF link is connected to multiple antennas through multiple phase shifters is also possible. The radio communication interface 912 may be a chip module having the BB processor 913 and the RF circuit 914 integrated thereon. The radio communication interface 912 may include multiple BB processors 913 and multiple RF circuits 914, as shown in Figure 13. Although Figure 13 shows the example in which the radio communication interface 912 includes multiple BB processors 913 and multiple RF circuits 914, the radio communication interface 912 may include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 13. Although Figure 13 shows the example in which the smartphone 900 includes multiple antennas 916, the smartphone 900 may include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 shown in Figure 13 via feeder lines, which are partially shown as dashed lines in Figure 13. The auxiliary controller 919 operates a minimum necessary function of the smartphone 900, for example, in a sleep mode.

In the smartphone 900 shown in Figure 13, the acquiring unit 101, the transmitting unit 102 and a transceiver of the electronic apparatus 100 may be implemented by the radio communication interface 912. At least a part of the functions may be implemented by the processor 901 or the auxiliary controller 919. For example, the processor 901 or the auxiliary controller 919 may implement the beam measurement and reporting on multiple BWPs of the UE by performing the functions of the acquiring unit 101, transmitting unit 102 and the executing unit 103.

### (Second Application Example)

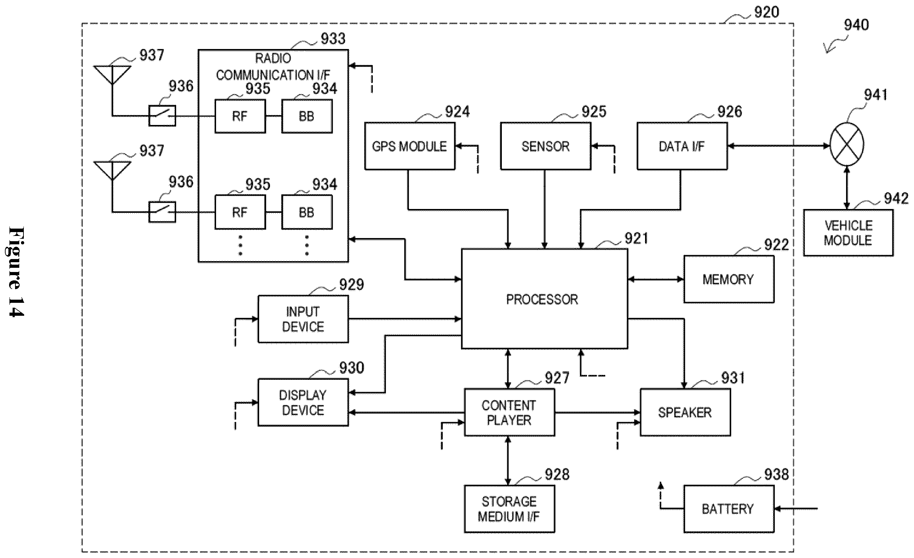

Figure 14 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or reproduced content. The speaker 931 outputs a sound for the navigation function or the reproduced content.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 14. Although Figure 14 shows the example in which the radio communication interface 933 includes multiple BB processors 934 and multiple RF circuits 935, the radio communication interface 933 may include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 14, the car navigation apparatus 920 may include multiple antennas 937. Although Figure 14 shows the example in which the car navigation apparatus 920 includes multiple antennas 937, the car navigation apparatus 920 may include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 14 via feeder lines that are partially shown as dash lines in Figure 14. The battery 938 accumulates power supplied from the vehicle.

In the car navigation device 920 shown in Figure 14, the acquiring unit 101, the transmitting unit 102, and a transceiver of the electronic apparatus 100 may be implemented by the radio communication interface 933. At least a part of the functions may be implemented by the processor 921. For example, the processor 921 may implement the beam measurement and reporting on multiple BWPs of the UE by performing the functions of the acquiring unit 101, transmitting unit 102 and the executing unit 103.

The technology according to the present disclosure may also be implemented as an in-vehicle system (or a vehicle) 940 including one or more blocks of the car navigation device 920, the in-vehicle network 941, and a vehicle module 942. The vehicle module 942 generates vehicle data (such as vehicle speed, engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

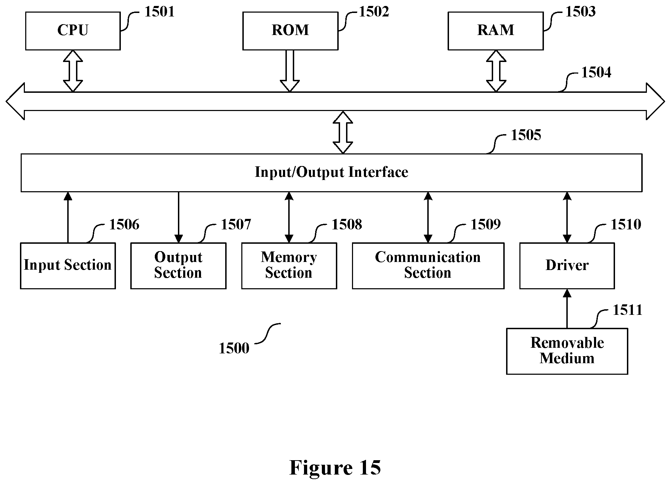

In the case where the present disclosure is realized with software or firmware, a program constituting the software is installed in a computer with a dedicated hardware structure (e.g. the general computer 1500 shown in Figure 15) from a storage medium or network, wherein the computer is capable of implementing various functions when installed with various programs.

In Figure 15, a central processing unit (CPU) 1501 executes various processing according to a program stored in a read-only memory (ROM) 1502 or a program loaded to a random access memory (RAM) 1503 from a memory section 1508. The data needed for the various processing of the CPU 1501 may be stored in the RAM 1503 as needed. The CPU 1501, the ROM 1502 and the RAM 1503 are linked with each other via a bus 1504. An input/output interface 1505 is also linked to the bus 1504.

The following components are linked to the input/output interface 1505: an input section 1506 (including keyboard, mouse and the like), an output section 1507 (including displays such as a cathode ray tube (CRT), a liquid crystal display (LCD), a loudspeaker and the like), a memory section 1508 (including hard disc and the like), and a communication section 1509 (including a network interface card such as a LAN card, modem and the like). The communication section 1509 performs communication processing via a network such as the Internet. A driver 1510 may also be linked to the input/output interface 1505, if needed. If needed, a removable medium 1511, for example, a magnetic disc, an optical disc, a magnetic optical disc, a semiconductor memory and the like, may be installed in the driver 1510, so that the computer program read therefrom is installed in the memory section 1508 as appropriate.

In the case where the foregoing series of processing is achieved through software, programs forming the software are installed from a network such as the Internet or a memory medium such as the removable medium 1511.

It should be appreciated by those skilled in the art that the memory medium is not limited to the removable medium 1511 shown in Figure 15, which has program stored therein and is distributed separately from the apparatus so as to provide the programs to users. The removable medium 1511 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1502 and the memory section 1508 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
acquire, from a base station, a channel state information (CSI) resource configuration and a CSI report configuration, wherein the CSI report configuration is associated with one or more CSI resource configurations, and the CSI resource configuration comprises a resource configuration for a reference signal on one or more bandwidth parts (BWPs); and
transmit, based on the CSI report configuration, a beam measurement result of a beam corresponding to a reference signal specified in the CSI resource configuration associated with the CSI report configuration to the base station, wherein the beam measurement result is obtained by measuring the reference signal.

2. The electronic apparatus according to claim 1, wherein each BWP other than an initial BWP only has a specific beam transmitting thereon, and all beams transmit on the initial BWP.

3. The electronic apparatus according to claim 1, wherein the CSI report configuration is associated with a plurality of CSI resource configurations, and each of the plurality of CSI resource configurations is a configuration for one BWP

4. The electronic apparatus according to claim 1, wherein the CSI report configuration is associated with one CSI resource configuration, each CSI resource configuration comprises a plurality of CSI resource sets, and each of the plurality of CSI resource sets corresponds to one BWP.

5. The electronic apparatus according to claim 1, wherein the CSI report configuration is associated with one CSI resource configuration, each CSI resource configuration comprises a plurality of CSI resource sets, and each CSI resource within each CSI resource set corresponds to one BWP respectively.

6. The electronic apparatus according to claim 2, wherein the processing circuitry is configured to determine, in a case of determining to measure a beam on a BWP that is currently non-activated based on the CSI report configuration, the BWP that is currently non-activated as a secondary activated BWP, so as to perform beam measurement on the secondary activated BWP.

7. The electronic apparatus according to claim 6, wherein the processing circuitry is configured to: activate the BWP that is currently non-activated as the secondary activated BWP so as to perform the beam measurement on the secondary activated BWP; and deactivate the secondary activated BWP after the measurement is completed.

8. The electronic apparatus according to claim 7, wherein the processing circuitry is configured to automatically activate and deactivate the BWP that is currently non-activated indicated in the CSI report configuration.

9. The electronic apparatus according to claim 7, wherein the processing circuitry is configured to acquire an activation instruction and a deactivation instruction from the base station.

10. The electronic apparatus according to claim 9, wherein the processing circuitry is configured to acquire the activation instruction or the deactivation instruction through radio resource control (RRC) configuration, MAC CE activation or DCI indication.

11. The electronic apparatus according to claim 6, wherein the processing circuitry is configured to transmit, when determining to measure beams on a plurality of BWPs that are currently non-activated, to the base station the beam measurement result on an uplink BWP indicated in the CSI report configuration after the beam measurement on all secondary activated BWPs is completed.

12. The electronic apparatus according to claim 11, wherein resource identifiers of reference signals to be measured on different secondary activated BWPs are different, and the beam measurement result comprises a resource identifier of the reference signal.

13. The electronic apparatus according to claim 11, wherein the resource identifiers of reference signals to be measured on different secondary activated BWPs are the same, and the beam measurement result comprises a resource identifier of the reference signal and information indicating an identifier of a corresponding BWP.

14. The electronic apparatus according to claim 6, wherein, the CSI report configuration is associated with a CSI resource configuration comprising a resource configuration for the reference signal on the initial BWP, the initial BWP is the secondary activated BWP, and the processing circuitry is configured to perform the beam measurement on the initial BWP, and transmit the beam measurement result on an uplink BWP indicated in the CSI report configuration.

15. The electronic apparatus according to claim 14, wherein a reference signal on the initial BWP is a part or all of reference signals of candidate beams configured in a beam failure recovery.

16. The electronic apparatus according to claim 2, wherein the processing circuitry is configured to switch, when determining to measure a beam on a BWP that is currently non-activated based on the CSI report configuration, to the BWP that is currently non-activated so as to perform beam measurement on the BWP that is currently non-activated, and switch back to a BWP that is currently activated after the beam measurement is completed.

17. The electronic apparatus according to claim 16, wherein the processing circuitry is configured to perform the switching between BWPs at a predetermined timing.

18. The electronic apparatus according to claim 16, wherein, the CSI report configuration is associated with a CSI resource configuration comprising a resource configuration for the reference signal on the initial BWP, and the processing circuitry is configured to switch to the initial BWP so as to perform beam measurement, and report the beam measurement result for the initial BWP.

19. The electronic apparatus according to claim 18, wherein the processing circuitry is further configured to:
acquire a first BWP switching instruction from the base station, wherein the first BWP switching instruction instructs to switch from the BWP that is currently activated to the initial BWP;
acquire a CSI request from the base station on the initial BWP; and
acquire a second BWP switching instruction from the base station, wherein the second BWP switching instruction instructs to switch from the initial BWP to the BWP that is currently activated.

20. The electronic apparatus according to claim 18, wherein the reference signal on the initial BWP is a part or all of the reference signals of candidate beams configured in a beam failure recovery.

21. The electronic apparatus according to claim 16, wherein the processing circuitry is configured to switch sequentially, when determining to measure beams on a plurality of BWPs that are currently non-activated, to the plurality of BWPs that are currently non-activated to perform beam measurement, and transmit to the base station the beam measurement result on an uplink BWP indicated in the CSI report configuration after all beam measurement is completed.

22. The electronic apparatus according to claim 21, wherein the processing circuitry is further configured to: for each of the plurality of BWPs that are currently non-activated,
acquire a first BWP switching instruction from the base station, wherein the first BWP switching instruction instructs to switch from the BWP that is currently activated to the BWP that is non-activated;
acquire a CSI request and an indication indicating whether to report the beam measurement result from the base station on the BWP that is non-activated,
wherein, when the measurement on the plurality of BWPs that are currently non-activated is completed, the processing circuitry acquires an indication indicating to report the beam measurement result from the base station and acquires a second BWP switching instruction from the base station, wherein the second BWP switching instruction instructs to switch from the BWP that is non-activated to the BWP that is currently activated.

23. The electronic apparatus according to claim 1, wherein the processing circuitry is further configured to acquire, from the base station, an aperiodic trigger or a semi-static trigger for the CSI report configuration, and perform beam measurement and transmission of the beam measurement result based on the CSI report configuration indicated in the aperiodic trigger or the semi-static trigger.

24. The electronic apparatus according to claim 23, wherein the aperiodic trigger or the semi-static trigger indicates to perform the beam measurement and measurement result report on at least a part of the reference signals configured in the CSI resource configuration.

25. The electronic apparatus according to claim 1, wherein the reference signal is a channel state information reference signal or a synchronizing signal block.

26. The electronic apparatus according to claim 1, wherein the base station is a base station in a non-terrestrial network.

27. An electronic apparatus for wireless communications, comprising:
processing circuitry, configured to:
provide, to user equipment, a channel state information (CSI) resource configuration and a CSI report configuration, wherein the CSI report configuration is associated with one or more CSI resource configurations, and the CSI resource configuration comprises a resource configuration for a reference signal on one or more bandwidth parts (BWPs); and
acquire, based on the CSI report configuration, a beam measurement result of a beam corresponding to a reference signal specified in the CSI resource configuration associated with the CSI report configuration from the UE, wherein the beam measurement result is obtained by measuring the reference signal.

28. The electronic apparatus according to claim 27, wherein each BWP other than an initial BWP only has a specific beam transmitting thereon, and all beams transmit on the initial BWP.

29. The electronic apparatus according to claim 27, wherein the CSI report configuration is associated with a plurality of CSI resource configurations, and each of the plurality of CSI resource configurations is a configuration for one BWP

30. The electronic apparatus according to claim 27, wherein the CSI report configuration is associated with one CSI resource configuration, each CSI resource configuration comprises a plurality of CSI resource sets, and each of the plurality of CSI resource sets corresponds to one BWP.

31. The electronic apparatus according to claim 27, wherein the CSI report configuration is associated with one CSI resource configuration, each CSI resource configuration comprises a plurality of CSI resource sets, and each CSI resource within each CSI resource set corresponds to one BWP respectively.

32. The electronic apparatus according to claim 28, wherein in a case that the CSI report configuration indicates to measure a beam on a BWP that is currently non-activated, an activation instruction and a deactivation instruction are transmitted to the user equipment to activate the corresponding BWP that is currently non-activated as a secondary activated BWP or deactivate the secondary activated BWP.

33. The electronic apparatus according to claim 32, wherein the processing circuitry is configured to transmit the activation instruction or the deactivation instruction through radio resource control (RRC) configuration, MAC CE activation or DCI indication.

34. The electronic apparatus according to claim 28, wherein, the CSI report configuration is associated with a CSI resource configuration comprising a resource configuration for the reference signal on the initial BWP, and the processing circuitry is further configured to:
transmit a first BWP switching instruction to the user equipment, wherein the first BWP switching instruction instructs the user equipment to switch from a BWP that is currently activated to the initial BWP;
transmit a CSI request on the initial BWP to the user equipment; and
transmit a second BWP switching instruction to the user equipment, wherein the second BWP switching instruction instructs the user equipment to switch from the initial BWP to the BWP that is currently activated.

35. The electronic apparatus according to claim 34, wherein the reference signal on the initial BWP is a part or all of the reference signals of candidate beams configured in a beam failure recovery.

36. The electronic apparatus according to claim 28, wherein the CSI report configuration indicates to measure beams on one or more BWPs that are currently non-activated, and the processing circuitry is further configured to: for each of the one or more BWPs that are currently non- activated,
transmit a first BWP switching instruction to the user equipment, wherein the first BWP switching instruction instructs the user equipment to switch from the BWP that is currently activated to the BWP that is non-activated;
transmit a CSI request on the BWP that is non-activated and an indication indicating whether to report the beam measurement result to the user equipment,
wherein, with respect to a last one of the one or more BWPs that are currently non-activated, the processing circuitry transmits an indication indicating to report the beam measurement result to the user equipment, and transmits a second BWP switching instruction to the user equipment, wherein the second BWP switching instruction instructs the user equipment to switch from the BWP that is non-activated to the BWP that is currently activated.

37. The electronic apparatus according to claim 27, wherein the processing circuitry is further configured to transmit an aperiodic trigger or semi-static trigger for the CSI report configuration to the user equipment, for the user equipment to perform beam measurement and transmission of the beam measurement result based on the CSI report configuration indicated in the aperiodic trigger or semi-static trigger.

38. The electronic apparatus according to claim 37, wherein the aperiodic trigger or the semi-static trigger indicates to perform the beam measurement and measurement result report on at least a part of the reference signals configured in the CSI resource configuration.

39. A method for wireless communications, comprising:
acquiring, from a base station, a channel state information (CSI) resource configuration and a CSI report configuration, wherein the CSI report configuration is associated with one or more CSI resource configurations, and the CSI resource configuration comprises a resource configuration for a reference signal on one or more bandwidth parts BWP; and
transmitting, based on the CSI report configuration, a beam measurement result of a beam corresponding to a reference signal specified in the CSI resource configuration associated with the CSI report configuration to the base station, wherein the beam measurement result is obtained by measuring the reference signal.

40. A method for wireless communications, comprising:
providing, to user equipment, a channel state information (CSI) resource configuration and a CSI report configuration, wherein the CSI report configuration is associated with one or more CSI resource configurations, and the CSI resource configuration comprises a resource configuration for a reference signal on one or more bandwidth parts (BWPs); and
acquiring, based on the CSI report configuration, a beam measurement result of a beam corresponding to a reference signal specified in the CSI resource configuration associated with the CSI report configuration from the UE, wherein the beam measurement result is obtained by measuring the reference signal.

41. A computer-readable storage medium having computer-executable instructions stored thereon, wherein the computer-executable instructions, when executed, implement the method for wireless communications according to claim 39 or 40.
